# EUROPÄISCHE PATENTSCHRIFT

(11) **EP 0 715 556 B1**
(45) Veröffentlichungstag und Bekanntmachung des Hinweises auf die Patenterteilung: **23.04.1997**
(21) Anmeldenummer: 94924196.2
(22) Anmeldetag: 19.08.1994
(51) Int. Cl.: B23K 11/25, B23K 11/11

(54) **VERFAHREN UND VORRICHTUNG ZUR BESTIMMUNG EINER TEMPERATUR AN EINER PUNKTSCHWEISSVERBINDUNG SOWIE DEREN ANWENDUNG ZUR BEURTEILUNG DER QUALITÄT DER PUNKTSCHWEISSVERBINDUNG**
PROCESS AND DEVICE FOR DETERMINING THE TEMPERATURE AT A SPOT WELD AND THEIR USE FOR EVALUATING THE QUALITY OF THE SPOT WELD
PROCEDE ET DISPOSITIF PERMETTANT DE DETERMINER LA TEMPERATURE D'UNE SOUDURE PAR POINTS ET LEUR UTILISATION POUR EVALUER LA QUALITE DE LADITE SOUDURE PAR POINTS

(30) Priorität: 24.08.1993 DE 4328337
(43) Veröffentlichungstag der Anmeldung: 12.06.1996
(73) Patentinhaber: SIEMENS AKTIENGESELLSCHAFT, 80333 München (DE)
(72) Erfinder: FORTMANN, Manfred, D-53804 Much (DE); KÜNNEMANN, Volkhard, D-51766 Engelskirchen (DE)
(86) Internationale Anmeldenummer: DE9400950
(87) Internationale Veröffentlichungsnummer: WO9505916

(56) Entgegenhaltungen:
- WO-A-92/10326
- DD-A- 268 648
- GB-A- 2 231 521

## Beschreibung

Die Erfindung betrifft ein Verfahren und eine Vorrichtung zur Bestimmung einer Temperatur an einer Punktschweißverbindung zwischen zwei Teilen aus mindestens einem ersten Metall, welche mittels zumindest einer mit einem der Teile in Kontakt stehenden Elektrode aus einem zweiten Metall gebildet wird, wobei die Temperatur aus einer zwischen der Elektrode und den Teilen gemessenen thermoelektrischen Spannung ermittelt wird. Außerdem betrifft die Erfindung die Anwendung eines solchen Verfahrens bzw. die Verwendung einer solchen Vorrichtung zur Beurteilung der Qualität einer Punktschweißverbindung.

Ein Verfahren und eine Vorrichtung der eingangs genannten Art sowie deren Anwendung zur Beurteilung der Qualität einer Punktschweißverbindung gehen hervor aus der WO 92/10326 A1, von der die Erfindung ausgeht.

Hinweise zur Bestimmung einer Temperatur an einer Punktschweißverbindung sind auch der DD 252 778 A1 und dem Aufsatz "Temperaturmessung beim Widerstandsschweißen" von W. Faber und M. Uhlmann, Schweißen und Schneiden 45 (1993) 308, entnehmbar. Die DD 252 778 A1 betrifft die Bestimmung einer Temperatur während der Bildung der Punktschweißverbindung, wobei insbesondere die zu messende Thermospannung von der Spannung, die von dem Schweißgerät an die zu verschweißenden Werkstücke gelegt wird, zu trennen ist; der Aufsatz betrifft die Auswahl von Materialien für Elektrode und Werkstück, um zu erreichen, daß eine Thermospannung zwischen Elektrode und Werkstück eine deutliche Temperaturabhängigkeit zeigt.

Punktschweißverbindungen werden vielfach, insbesondere im Automobilbau, verwendet, wo metallische Teile, insbesondere Blechteile, miteinander verbunden werden sollen. Vielfach dienen solche Punktschweißverbindungen nicht nur zum vorläufigen Zusammenheften von Bauteilen, sondern sollen endgültige Verbindungen darstellen und müssen dementsprechend allen Belastungen, denen die miteinander verbundenen Bauteile bestimmungsgemäß aussetzbar sind, standhalten können. Dementsprechend besteht ein Bedürfnis dahingehend, die Qualität einer Puntschweißverbindung beurteilen zu können, um eine Qualitätssicherung durchführen zu können.

Bestimmend für die Qualität einer Punktschweißverbindung ist die Wärmeentwicklung in der Zone, in der die Punktschweißverbindung entstehen soll, wobei insbesondere ein ausreichend ausgedehntes Schmelzbad zwischen den miteinander zu verbindenden Teilen erreicht werden muß. Fließt der elektrische Strom, der die Wärmeentwicklung bewirken soll, nicht nur durch die Zone, wo die Punktschweißverbindung entstehen soll, sondern auch über andere Verbindungen (die üblicherweise als "Nebenschlüsse" bezeichnet werden), so kann dies die Qualität der entstehenden Punktschweißverbindung erheblich beeinträchtigen und möglicherweise verhindern, daß die Punktschweißverbindung überhaupt zustandekommt. Vor allem im Zuge von automatisierten Fabrikationsprozessen besteht das Bedürfnis nach einer laufenden Beurteilung der Qualität von Punktschweißverbindungen, um ungenügende Punktschweißverbindungen sofort erkennen und aussondern zu können. Stichprobenartige Kontrolluntersuchungen von Punktschweißverbindungen, die nicht unbedingt zerstörungsfrei sein müssen, werden unter Umständen nicht als ausreichend zur Sicherung der gewünschten Qualität von Punktschweißverbindungen erachtet.

Das aus der WO 92/10326 A1 hervorgehende Verfahren zur Bestimmung einer Temperatur an einer Punktschweißverbindung, welches insbesondere geeignet ist zur Anwendung im Rahmen der Beurteilung der Qualität einer Punktschweißverbindung, kann zu Problemen führen, wenn Temperaturmessungen an vielzähligen, mit kurzem zeitlichem Abstand hintereinander gebildeten Punktschweißverbindungen durchzuführen sind. Werden mit einer Elektrode in mehr oder weniger rascher Folge Punktschweißverbindungen ausgeführt, so kann sich die Elektrode merklich erwärmen und damit die zwischen ihr und den miteinander zu verschweißenden Teilen zu messende thermoelektrische Spannung merklich beeinflussen. Dies kann dazu führen, daß ein eingeführtes Kriterium zur Entscheidung über die Qualität einer Punktschweißverbindung versagt dahingehend, daß an sich gute Punktschweißverbindungen als wertlos bezeichnet werden.

Dementsprechend liegt der Erfindung die Aufgabe zugrunde, ein Verfahren zur Bestimmung einer Temperatur an einer Punktschweißverbindung der in der Einleitung genannten Art anzugeben, welches gegenüber einer Veränderung der Temperatur der Elektrode weitgehend unempfindlich ist, wobei allerdings der zusätzliche apparative Aufwand nach Möglichkeit gering bleiben soll.

Zur Lösung dieser Aufgabe wird ein Verfahren zur Bestimmung einer Temperatur an einer Punktschweißverbindung zwischen zwei Teilen aus mindestens einem ersten Metall, welche mittels zumindest einer mit einem der Teile in Kontakt stehenden Elektrode aus einem zweiten Metall gebildet wird, wobei die Temperatur aus einer zwischen der Elektrode und den Teilen gemessen thermoelektrischen Spannung ermittelt wird, angegeben, wobei vor der Bildung der Punktschweißverbindung ein erster Meßwert und nach der Bildung der Punktschweißverbindung ein zweiter Meßwert für die thermoelektrische Spannung bestimmt und die Temperatur unter Berücksichtigung sowohl des ersten als auch des zweiten Meßwerts bestimmt wird.

Die Erfindung geht von der Erkenntnis aus, daß die Kenntnis der thermoelektrischen Spannung zwischen der Elektrode und den Teilen vor der Bildung der Punktschweißverbindung eine hinreichende und darüber hinaus einfach verwertbare Aussage über die Temperatur der Elektrode, insbesondere unter der Voraussetzung, daß die Temperatur der miteinander zu verschweißenden Teile weitgehend konstant bleibt, erlaubt. Dementsprechend kann durch Auswertung eines vor der Bildung der Punktschweißverbindung gewonnenen Meßwerts zusammen mit Meßwerten, die nach der Bildung der Punktschweißverbindung gewonnnen wurden, eine von der Temperatur der Elektrode weitgehend unabhängige Aussage über die Temperatur an der Punktschweißverbindung gemacht werden. Der apparative und verfahrensmäßige Aufwand zur Realisierung der Erfindung ist sehr gering, denn bei praktisch jedem Punktschweißprozeß liegt zwischen dem Aufsetzen der Elektrode auf die zu verschweißenden Teile und der tatsächlichen Bildung der Punktschweißverbindung ein Zeitraum, der ausreichend lang ist zur Messung der thermoelektrischen Spannung. Typischerweise werden für eine solche Messung nicht mehr als 20 Millisekunden benötigt. Auch der Aufwand zur Auswertung des zusätzlichen Meßwerts hält sich bei den üblicherweise eingesetzten elektronischen Auswerteinrichtungen in engen Grenzen.

Vorzugsweise wird die Temperatur an der Punktschweißverbindung aus der Differenz zwischen dem ersten und dem zweiten Meßwert bestimmt, was im Fall einer linearen Abhängigkeit der thermoelektrischen Spannung von der Temperatur der Elektrode weitgehend exakt ist. Auch für den Fall, daß eine nichtlineare Abhängigkeit der thermoelekrischen Spannung von der Elektrode vorliegt, was bei bestimmten Kombinationen von erstem und zweitem Metall der Fall sein kann, ist dieser Ansatz in der Regel, insbesondere unter der Voraussetzung, daß die Temperatur der Elektrode sich nicht allzu stark ändert, für praktische Zwecke ausreichend.

Besonders bevorzugt ist es, die Punktschweißverbindung mit zwei an sich gegenüberliegenden Seiten der Teile angeordneten Elektroden zu bilden und zwischen jeder Elektrode und den Teilen jeweils die thermoelektrische Spannung zu bestimmen. Dabei werden der erste Meßwert und der zweite Meßwert gebildet jeweils als Mittelwert aus den an den Elektroden gemessenen entsprechenden thermoelektrischen Spannungen. Eine Erhöhung der Genauigkeit der Messung ist damit erreichbar.

Um die Genauigkeit der Messung weiter zu erhöhen und gegebenenfalls auch Zugang zu weiteren Bestimmungsgrößen für die Qualität der Punktschweißverbindung zu erhalten, wird vorzugsweise ein zeitlicher Verlauf für zumindest einen der Meßwerte bestimmt, insbesondere für den zweiten Meßwert. Der zeitliche Verlauf ist, wie weiter unten noch ausgeführt wird, zur Beurteilung der Qualität der Punktschweißverbindung eine interessante Größe.

Zur Lösung der auf eine Vorrichtung bezogenen Aufgabe wird eine Vorrichtung zur Bestimmung einer Temperatur an einer Punktschweißverbindung zwischen zwei Teilen aus mindestens einem ersten Metall, welche mittels zumindest einer mit einem der Teile in Kontakt stehenden Elektrode aus einem zweiten Metall gebildet wird, mit zumindest einem Voltmeter zur Ermittlung einer der Temperatur entsprechenden thermoelektrischen Spannung zwischen der Elektrode und den Teilen angegeben, die erfindungsgemäß außerdem eine Steuereinrichtung zur Aufnahme zumindest eines ersten Meßwerts für die thermoelektrische Spannung vor der Bildung der Punktschweißverbindung und zumindest eines zweiten Meßwerts für die thermoelektrische Spannung nach der Bildung der Punktschweißverbindung, einen ersten Speicher zur Einspeicherung zumindest eines ersten Meßwerts, einen zweiten Speicher zur Einspeicherung des zumindest einen zweiten Meßwerts sowie einen Subtrahierer zur Bildung einer Differenz aus dem in dem ersten Speicher gespeicherten zumindest einen ersten Meßwert und dem in dem zweiten Speicher gespeicherten zumindest einen zweiten Meßwert und zur Bestimmung der Temperatur aus der Differenz aufweist.

Die Funktion dieser Vorrichtung erklärt sich direkt aus den zu dem erfindungsgemäßen Verfahren gegebenen Ausführungen.

Die erfindungsgemäß zu bestimmende Differenz ist ein Maß für die an der Punktschweißverbindung herrschende Temperatur, bezogen auf die Temperatur an der entsprechenden Stelle vor Bildung der Punktschweißverbindung. Die Differenz ist daher auch ein unmittelbares Maß für die Energie, die zur Bildung der Punktschweißverbindung an die entsprechende Stelle gebracht wurde. Sie erlaubt daher eine sichere Aussage über die Punktschweißverbindung.

Vorzugsweise sind in der Vorrichtung zwei Voltmeter vorgesehen, deren jedes einer von zwei an sich gegenüberliegenden Seiten der Teile anordenbaren Elektroden zugeordnet ist, sowie ein Mittelwertbildner, der aus jeweils zwei gleichzeitig mit den Voltmetern gemessenen Werten einen Mittelwert bildet und als ersten oder zweiten Meßwert bereitstellt. Diese Ausgestaltung erlaubt insbesondere die Mittelung der Thermospannungen zwischen den Elektroden und beiden Teilen, was die Zuverlässigkeit der Messung und der Bestimmung der Temperatur erhöht.

Der zweite Speicher in der Vorrichtung ist weiterhin vorzugsweise eingerichtet zur Speicherung einer Vielzahl von zweiten Meßwerten, der Subtrahierer ist eingerichtet zur Bildung eines Mittelwerts der in dem zweiten Speicher gespeicherten zweiten Meßwerte, und außerdem sind ein Differenzierer zur Bildung einer zeitlichen Ableitung des von dem Subtrahierer gebildeten Mittelwerts sowie ein Dividierer zur Bildung eines Quotienten aus der Differenz als Divident und der Ableitung als Divisor vorgesehen.

Die Einspeicherung einer Vielzahl von zweiten Meßwerten zu jeder Punktschweißverbindung, wie vorstehend beschrieben, hat mehrere Vorteile. Zunächst ist es möglich, aus allen gespeicherten zweiten Meßwerten einen Mittelwert für die zu messende thermoelektrische Spannung zu ermitteln, wobei gegebenenfalls aus der Gesamtheit der gespeicherten Meßwerte bestimmte Werte ausgewählt werden können. Ein analoger Vorteil ist auch für den ersten Meßwert erzielbar, indem auch für diesen eine Vielzahl von Meßwerten gespeichert und in geeigneter Weise, gegebenenfalls unter Auswahl einer bestimmten Teilmenge der Gesamtheit der Meßwerte, gemittelt werden. Von Bedeutung für den zweiten Meßwert ist darüber hinaus, daß sich aus einer Vielzahl von Meßwerten der zeitliche Verlauf der thermoelektrischen Spannung nach der Bildung der Punktschweißverbindung rekonstruieren und für den der weiteren Verarbeitung zugeführten Mittelwert eine zeitliche Ableitung bestimmen läßt. Ein aus der Differenz und der zeitlichen Ableitung gebildeter Quotient ist ein zur Bestimmung der Qualität der gebildeten Punktschweißverbindung besonders bevorzugter Wert, da er sowohl von der in die Punktschweißverbindung insgesamt eingebrachten Energie als auch von der Art und Weise, wie die Punktschweißverbindung nach ihrer Bildung abkühlt, abhängig ist; wie in der in Bezug genommenen WO 92/10326 A1 eingehend erläutert, ist der zeitliche Verlauf der thermoelektrischen Spannung nach der Bildung der Punktschweißverbindung wesentlich bestimmt davon, ob bei der Bildung der Punktschweißverbindung eine hinreichende Verflüssigung von Werkstoff der miteinander zu verschweißenden Teile stattgefunden hat.

Eine Bewertung des soeben beschriebenen Quotienten erfolgt vorzugsweise mit einem dem Dividierer nachgeschalteten Analysator, der weiterhin eine Meldung an die Steuereinrichtung abgibt, ob der Quotient als zulässig oder als unzulässig anzusehen ist. Die Steuereinrichtung kann diese Meldung weiterverarbeiten und leitet diese vorzugsweise einer Schweißstromquelle zu, die zur Bereitstellung von Strom zur Bildung der Punktschweißverbindung vorgesehen ist; hierbei wird insbesondere die Abgabe des Stroms auf der Grundlage der Meldung gesteuert, um für des weiteren zu bildende Punktschweißverbindungen eine hinreichende Qualität zu gewährleisten.

Mit großem Vorteil findet das Verfahren Anwendung bzw. die Vorrichtung Verwendung zur Bestimmung einer Temperatur für jede Punktschweißverbindung aus einer Vielzahl von Punktschweißverbindungen, die in mehr oder weniger schneller Abfolge nacheinander zu bilden sind. Obwohl sich bei einer derartigen Abfolge vieler Schweißprozesse die Temperatur einer dafür eingesetzten Elektrode oder Anordnung mehrerer Elektroden deutlich verändern kann, wird durch das Verfahren eine gleichbleibend zuverlässige Aussage über die Temperatur jeder einzelnen Punktschweißverbindung erhalten.

Die Erfindung betrifft auch die Anwendung des Verfahrens bzw. die Verwendung der Vorrichtung zur Bestimmung einer Temperatur an einer Punktschweißverbindung zur Beurteilung der Qualität der Punktschweißverbindung.

Zu diesem Zweck wird vorzugsweise die Differenz zwischen dem ersten und dem zweiten Meßwert und außerdem neben dem zweiten Meßwert selbst dessen zeitliche Ableitung bestimmt, und es wird ein Quotient aus der Differenz als Dividend und der zeitlichen Ableitung als Divisor zur Beurteilung der Qualität gebildet. Dieser Quotient kann mehr oder weniger unmittelbar als Größe zur Bewertung der Qualität der Punktschweißverbindung herangezogen werden; selbstverständlich ist es nicht ausgeschlossen, daß er im Rahmen des Bewertungsprozesses einer arithmetischen Weiterverarbeitung, insbesondere einer Skalierung, unterzogen wird.

Besonders vorteilhaft ist die Anwendung des Verfahrens bzw. die Verwendung der Vorrichtung zur Beurteilung der Qualität jeder Punktschweißverbindung aus einer Vielzahl von nacheinander gebildeten Punktschweißverbindungen derart, daß für jede Punktschweißverbindung der Quotient gebildet wird. Dies gewährleistet eine zuverlässige Beurteilung der Qualität auch solcher Punktschweißverbindungen, die in mehr oder weniger rascher Abfolge nacheinander gebildet werden, wobei deutliche Veränderungen der Temperatur der benutzten Elektrode bzw. der benutzten Elektroden auftreten.

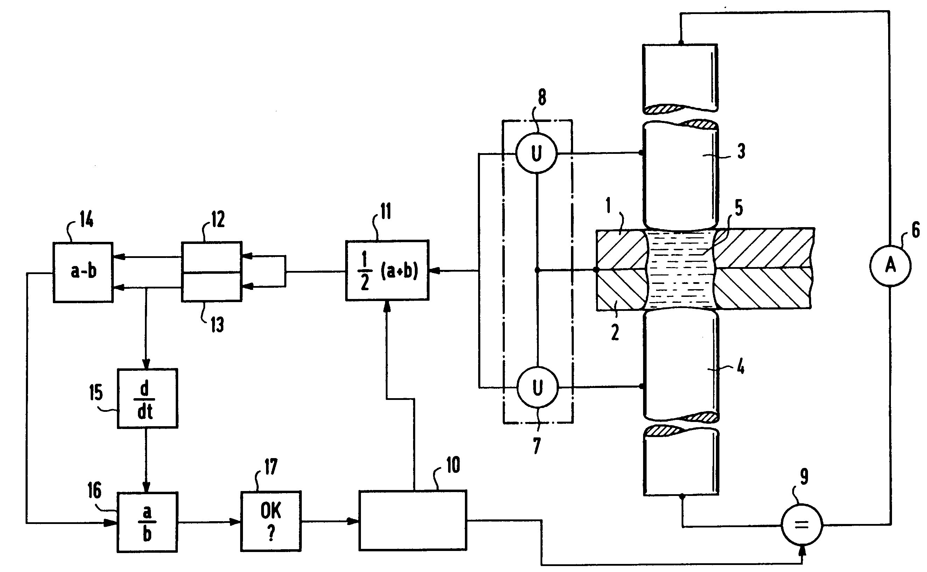

Ein Ausführungsbeispiel für eine Einrichtung zur Bildung einer Punktschweißverbindung nebst Mitteln zur Messung von thermoelektrischen Spannungen und zur erfindungsgemäßen Bestimmung einer Temperatur geht aus der Zeichnung hervor.

Zwei Teile 1, 2, beispielsweise Stahlbleche, werden durch eine Punktschweißung miteinander verbunden, indem zwei Elektroden 3 und 4, die beispielsweise aus einer Kupferlegierung bestehen, einander gegenüberliegend mit den zusammengepreßten Teilen 1 und 2 in Kontakt gebracht werden. Hierauf werden die Elektroden 3, 4 mit Hilfe einer Schweißstromquelle 9 mit einem Strom, meist einem Gleichstrom, beaufschlagt, was zu einer Erhitzung und schließlich zum lokal begrenzten Schmelzen führt. Hierdurch entsteht die Punktschweißverbindung 5; beim Erstarren der zunächst vorliegenden Schmelze werden die Teile 1, 2 dauerhaft miteinander verbunden, jedenfalls dann, wenn die Punktschweißverbindung 5 eine hinreichend hohe Qualität hat. Die Stärke des Schweißstromes wird mit Hilfe eines Amperemeters 6 gemessen, und die beim Schweißvorgang zwischen jeweils einer Elektrode 3, 4 und den Teilen 1, 2 liegende Spannung wird mit Hilfe zweier Voltmeter 7 und 8 bestimmt. Es versteht sich, daß die Anzeige von Strom oder Spannung durch das Amperemeter 6 oder die Voltmeter 7 und 8 nicht notwendigerweise auf einem Zeigerinstrument erfolgen muß, sondern es ist sehr wohl denkbar und im Zusammenhang mit modernen Schweißeinrichtungen vorteilhaft, daß das Amperemeter 6 und die Voltmeter 7 und 8 die jeweiligen Informationen an eine Steuereinrichtung 10 weiterleiten. Für das Amperemeter 6 ist dies der Übersicht halber nicht dargestellt.

Sowohl vor dem Beginn als auch nach Beendigung der Punktschweißung messen die Voltmeter 7 und 8, gegebenenfalls nach einer entsprechenden Umschaltung ihrer Meßbereiche, jeweils eine thermoelektrische Spannung zwischen der entsprechenden Elektrode 3 oder 4 und den Teilen 1 und 2. Durch die nach Beendigung der Punktschweißung erst allmählich, in einem gewissen Tempo abnehmende Temperatur an der Punktschweißverbindung 5 wird zwischen jedem Teil 1, 2 und der damit in Kontakt stehenden Elektrode 3 bzw. 4 eine thermoelektrische Spannung erzeugt, die im Laufe der Zeit, d. h. über einen Zeitraum von einer halben bis einer Sekunde, in definierter Weise abfällt. Der genaue zeitliche Verlauf wird wesentlich mitbestimmt von den Vorgängen in der Punktschweißverbindung 5. Wird in der Punktschweißverbindung 5 eine ausreichend große Schmelze erzeugt, so ist der Abfall der thermoelektrischen Spannung deutlich verlangsamt gegenüber dem Abfall einer thermoelektrischen Spannung, wenn die Erzeugung einer Schmelze ausgeblieben ist; der Grund hierfür ist, daß beim Erstarren der Schmelze latent gespeicherte Wärme frei wird, die dem Abfall der Temperatur entgegenwirkt. Dieser Sachverhalt ist in der bereits in Bezug genommenen und ausführlich gewürdigten WO 92/10326 A1 eingehend erläutert.

Im Sinne der Erfindung wird auch vor dem Beginn der Punktschweißung eine thermoelektrische Spannung gemessen, vorzugsweise unter Mittelung über Meßwerte beider Voltmeter 7 und 8, woraus eine Aussage über die Temperaturen der Elektroden 3 und 4 abgeleitet wird, durch deren Einbeziehung in die Bestimmung der Temperatur an der Punktschweißverbindung 5 bzw. die Beurteilung der Qualität der Punktschweißverbindung 5 ein erheblicher Gewinn an Genauigkeit und Reproduzierbarkeit, auch dann, wenn eine große Vielzahl von kurz nacheinander hergestellten Punktschweißverbindungen 5 zu betrachten ist, resultiert. Die Meßwerte beider Voltmeter 7 und 8 werden einem Mittelwertbildner 11 zugeführt, der die Meßwerte mittelt und, gesteuert von der Steuereinrichtung 10, in einem ersten Speicher 12 oder einem zweiten Speicher 13 abspeichert. Der erste Speicher 12 ist dabei gedacht zur Abspeicherung von Mittelwerten aus jeweils zwei vor der Bildung der Punktschweißverbindung 5 gewonnenen ersten Meßwerten, und im zweiten Speicher 13 sollen Mittelwerte der nach der Bildung der Punktschweißverbindung 5 gewonnenen zweiten Meßwerte eingespeichert werden. Der Einfachheit halber sind beide Speicher 12, 13 unstrukturiert gezeichnet; dabei soll der zweite Speicher 13 aber für die Einspeicherung einer Vielzahl von Mittelwerten aus zweiten Meßwerten geeignet sein und somit erlauben, den Verlauf der Temperatur an der Punktschweißverbindung 5 kurz nach ihrer Bildung aufzuzeichnen. Zur Bildung der zur Bestimmung der Temperatur an der Punktschweißverbindung 5 wesentlichen Differenz zwischen einem zweiten Meßwert und einem ersten Meßwert, was in einem in den Speichern 12 und 13 nachgeschalteten Subtrahierer 14 erfolgen soll, ist gegebenenfalls in geeigneter Weise wiederum ein Mittelwert der in dem zweiten Speicher 13 gespeicherten Werte zu bilden und heranzuziehen; der Einfachheit halber sind hierfür erforderliche Einrichtungen, die, da die erforderlichen Operationen arithmetischer Art sind, vorzugsweise als zu dem Subtrahierer 14 gehörig zu verstehen sind, in der Figur nicht dargestellt. Analoges gilt, wenn der erste Speicher 12 eingerichtet ist zur Speicherung einer Mehrzahl von Werten.

Die praktische Realisierung der Bestandteile der Vorrichtung, die die Meßwerte verarbeiten oder Steuerungsaufgaben erfüllen, also des Mittelwertbildners 11, der Speicher 12 und 13, des Subtrahierers 14, des Differenzierers 15, des Dividierers 16 des Analysators 17 und der Steuereinrichtung 10 kann sowohl in Form diskreter, analoger oder digitaler Baugruppen als auch in Form eines entsprechend programmierten Computers mit entsprechenden Schnittstellen zu den Voltmetern 7 und 8 und der Schweißstromquelle 9 erfolgen.

Um die Qualität der Punktschweißverbindung 5 zu beurteilen, wird außer der besagten Differenz die zeitliche Ableitung des zweiten Meßwerts gebildet, wofür ein an dem zweiten Speicher 13 vorgesehener Differenzierer 15 vorgesehen ist. Dieser gibt die Ableitung, ebenso wie der Subtrahierer 14 die Differenz, an einen Dividierer 16, welcher den Quotienten aus der Differenz als Dividend und der zeitlichen Ableitung als Divisor bildet. Dieser Quotient dient als Meßgröße zur Beurteilung der Qualität der Punktschweißverbindung. Er wird hierzu einem Analysator 17 zugeführt, welcher entscheidet, ob der Quotient in einem als zulässig für eine Punktschweißverbindung 5 hinreichender Qualität erachteten Wertebereich liegt oder nicht; das Ergebnis dieser Entscheidung leitet er der Steuereinrichtung 10 zu, die ihrerseits auf die Schweißstromquelle 9 einwirkt, wobei sie ihr beispielsweise Vorgaben macht, um eine hinreichende Qualität für jede weitere zu bildende Punktschweißverbindung 5 zu gewährleisten.

## Patentansprüche

1. Verfahren zur Bestimmung einer Temperatur an einer Punktschweißverbindung (5) zwischen zwei Teilen (1, 2) aus mindestens einem ersten Metall, welche mittels zumindest einer mit einem der Teile (1, 2) in Kontakt stehenden Elektrode (3, 4) aus einem zweiten Metall gebildet wird, wobei die Temperatur aus einer zwischen der Elektrode (3, 4) und den Teilen (1, 2) gemessenen thermoelektrischen Spannung ermittelt wird, **dadurch gekennzeichnet**, daß vor der Bildung der Punktschweißverbindung (5) ein erster Meßwert und nach der Bildung der Punktschweißverbindung (5) ein zweiter Meßwert für die thermoelektrische Spannung bestimmt und die Temperatur unter Berücksichtigung sowohl des ersten als auch des zweiten Meßwerts bestimmt wird.

2. Verfahren nach Anspruch 1, bei dem die Temperatur aus der Differenz zwischen dem ersten und dem zweiten Meßwert bestimmt wird.

3. Verfahren nach Anspruch 1 oder 2, mit zwei an sich gegenüberliegenden Seiten der Teile (1, 2) angeordneten Elektroden (3, 4), wobei zwischen jeder Elektrode (3, 4) und den Teilen (1, 2) die thermoelektrische Spannung gemessen wird und wobei jeder Meßwert als Mittelwert der an den Elektroden (3, 4) jeweils gemessenen thermoelektrischen Spannungen bestimmt wird.

4. Verfahren nach einem der vorhergehenden Ansprüche, bei dem ein zeitlicher Verlauf für zumindest einen der Meßwerte, vorzugsweise für den zweiten Meßwert, bestimmt wird.

5. Verfahren nach einem der vorhergehenden Ansprüche, wobei für jede Punktschweißverbindung (5) aus einer Vielzahl von nacheinander zu bildenden Punktschweißverbindungen (5) eine Temperatur bestimmt wird.

6. Vorrichtung zur Bestimmung einer Temperatur an einer Punktschweißverbindung (5) zwischen zwei Teilen (1, 2) aus mindestens einem ersten Metall, welche mittels zumindest einer mit einem der Teile (1, 2) in Kontakt stehenden Elektrode (3, 4) aus einem zweiten Metall gebildet wird, mit zumindest einem Voltmeter (7, 8) zur Ermittlung einer der Temperatur entsprechenden thermoelektrischen Spannung zwischen der Elektrode (3, 4) und den Teilen (1, 2),
**gekennzeichnet durch** eine Steuereinrichtung (10) zur Aufnahme zumindest eines ersten Meßwerts für die thermoelektrische Spannung vor der Bildung der Punktschweißverbindung (5) und zumindest eines zweiten Meßwerts für die thermoelektrische Spannung nach der Bildung der Punktschweißverbindung (5), einen ersten Speicher (12) zur Einspeicherung des zumindest einen ersten Meßwerts, einen zweiten Speicher (13) zur Einspeicherung des zumindest einen zweiten Meßwerts sowie einen Subtrahierer (14) zur Bildung einer Differenz aus dem in dem ersten Speicher (12) gespeicherten zumindest einen ersten Meßwert und dem in dem zweiten Speicher (13) gespeicherten zumindest einen zweiten Meßwert und zur Bestimmung der Temperatur aus der Differenz.

7. Vorrichtung nach Anspruch 6 mit zwei Voltmetern (7, 8), deren jedes einer von zwei an sich gegenüberliegenden Seiten der Teile (1, 2) anordenbaren Elektroden (3, 4) zugeordnet ist, und einem Mittelwertbildner (11), der aus jeweils zwei gleichzeitig mit den Voltmetern (7, 8) gemessenen Werten einen Mittelwert bildet und als ersten oder zweiten Meßwert bereitstellt.

8. Vorrichtung nach Anspruch 6 oder 7, bei der der zweite Speicher (13) eingerichtet ist zur Speicherung einer Vielzahl von zweiten Meßwerten, bei der der Subtrahierer (14) eingerichtet ist zur Bildung eines Mittelwerts der in dem zweiten Speicher (13) gespeicherten zweiten Meßwerte, und die einen Differenzierer (15) zur Bildung einer zeitlichen Ableitung des von dem Subtrahierer (14) gebildeten Mittelwerts und einen Dividierer (16) zur Bildung eines Quotienten aus der Differenz als Dividend und der Ableitung als Divisor aufweist.

9. Vorrichtung nach Anspruch 8 mit einem Analysator (17) zur Bewertung des Quotienten und Abgabe einer Meldung an die Steuereinrichtung (10), ob der Quotient als zulässig oder als unzulässig gilt.

10. Vorrichtung nach Anspruch 9, bei der die Steuereinrichtung (10) mit einer Schweißstromquelle (9) zur Bereitstellung von Strom zur Bildung der Punktschweißverbindung (5) verbindbar ist und die Abgabe des Stroms steuern kann.

11. Anwendung des Verfahrens nach einem der Ansprüche 1 bis 5 oder Verwendung der Vorrichtung nach einem der Ansprüche 6 bis 10 zur Beurteilung der Qualität einer Punktschweißverbindung (5).

12. Anwendung oder Verwendung nach Anspruch 11, wobei eine Differenz zwischen dem ersten und dem zweiten Meßwert gebildet und neben dem zweiten Meßwert eine zeitliche Ableitung des zweiten Meßwertes bestimmt und der Quotient aus der Differenz als Dividend und der zeitlichen Ableitung als Divisor zur Beurteilung der Qualität gebildet wird.

13. Anwendung oder Verwendung nach Anspruch 12, wobei die Qualität jeder Punktschweißverbindung (5) aus einer Vielzahl von nacheinander gebildeten Punktschweißverbindungen (5) beurteilt wird derart, daß für jede Punktschweißverbindung (5) der Quotient gebildet wird.

## Claims

1. Method for determining a temperature at a spot weld (5) between two parts (1, 2) made of at least one first metal, which spot weld is formed by means of at least one electrode (3, 4) which is made of a second metal and is in contact with one of the parts (1, 2), with the temperature being established from a thermoelectric voltage measured between the electrode (3, 4) and the parts (1, 2), characterised in that a first measured value for the thermoelectric voltage is determined before the formation of the spot weld (5) and a second measured value for the thermoelectric voltage is determined after the formation of the spot weld (5), and the temperature is determined taking into account both the first measured value and the second measured value.

2. Method according to claim 1, in which the temperature is determined from the difference between the first measured value and the second measured value.

3. Method according to claim 1 or 2, having two electrodes (3, 4) arranged on opposing sides of the parts (1, 2), wherein the thermoelectric voltage is measured between each electrode (3, 4) and the parts (1, 2), and wherein each measured value is determined as an average value of the thermoelectric voltages respectively measured at the electrodes (3, 4).

4. Method according to one of the preceding claims, in which a course over time is determined for at least one of the measured values, preferably for the second measured value.

5. Method according to one of the preceding claims, wherein a temperature is determined for each spot weld (5) of a plurality of spot welds (5) to be formed one after the other.

6. Device for determining a temperature at a spot weld (5) between two parts (1, 2) made of at least one first metal, which spot weld is formed by means of at least one electrode (3, 4) which is made of a second metal and is in contact with one of the parts (1, 2), having at least one voltmeter (7, 8) for establishing a thermoelectric voltage between the electrode (3, 4) and the parts (1, 2) that corresponds to the temperature, characterised by a control unit (10) for recording at least one first measured value for the thermoelectric voltage before the formation of the spot weld (5) and at least one second measured value for the thermoelectric voltage after the formation of the spot weld (5), a first memory (12) for storing the at least one first measured value, a second memory (13) for storing the at least one second measured value, and also a subtractor (14) for forming a difference from the at least one first measured value stored in the first memory (12) and the at least one second measured value stored in the second memory (13) and for determining the temperature from the difference.

7. Device according to claim 6, having two voltmeters (7, 8), each of which is allocated to one of two electrodes (3, 4) that can be arranged on opposing sides of the parts (1, 2), and an averaging unit (11) which forms an average value from in each case two values measured simultaneously by the voltmeters (7, 8) and prepares this average value as a first measured value or second measured value.

8. Device according to claim 6 or 7, in which the second memory (13) is set up in order to store a plurality of second measured values, in which the subtractor (14) is set up in order to form an average value of the second measured values stored in the second memory (13), and which device has a differentiator (15) for forming a derivation over time of the average value formed by the subtractor (14), and a divider (16) for forming a quotient from the difference as dividend and the derivation as divisor.

9. Device according to claim 8, having an analyzer (17) for evaluating the quotient and giving a message to the control unit (10) as to whether the quotient is permissible or impermissible.

10. Device according to claim 9, in which the control device (10) can be connected to a welding-current source (9) for making available current in order to form the spot weld (5) and can control the output of current.

11. Application of the method according to one of the claims 1 to 5, or use of the device according to one of the claims 6 to 10, for evaluating the quality of a spot weld (5).

12. Application or use according to claim 11, wherein a difference between the first measured value and the second measured value is formed, and as well as the second measure value a derivation over time of the second measured value is determined, and the quotient is formed from the difference as dividend and the derivation over time as divisor in order to evaluate the quality.

13. Application or use according to claim 12, wherein the quality of each spot weld (5) of a plurality of spot welds (5) formed one after the other is evaluated in such a way that the quotient is formed for each spot weld (5).

## Revendications

1. Procédé de détermination d'une température d'une soudure par points (5) entre deux pièces (1, 2) consistant en au moins un premier métal, cette soudure étant formée au moyen d'au moins une électrode (3, 4) en contact avec l'une des pièces (1, 2) et en un deuxième métal, la température étant déterminée à partir d'une tension thermoélectrique mesurée entre l'électrode (3, 4) et les pièces (1, 2),
caractérisé en ce que l'on détermine une première valeur de mesure avant la formation de la soudure par points (5) et une deuxième valeur de mesure après la formation de la soudure par points (5), pour la tension thermoélectrique, et en ce que l'on détermine la température en prenant en compte aussi bien la première valeur de mesure que la deuxième valeur de mesure.

2. Procédé selon la revendication 1, dans lequel on détermine la température à partir de la différence entre la première et la deuxième valeurs de mesure.

3. Procédé selon la revendication 1 ou 2, dans lequel il est prévu deux électrodes (3, 4) disposées sur les faces opposées des pièces (1, 2), la tension thermoélectrique étant mesurée entre chaque électrode (3, 4) et les pièces (1, 2) et chaque valeur de mesure étant déterminée en tant que valeur moyenne des tensions thermoélectriques chaque fois mesurées aux électrodes (3, 4).

4. Procédé selon l'une des revendications précédentes, dans lequel on détermine une courbe en fonction du temps pour au moins l'une des valeurs de mesure, de préférence pour la deuxième valeur de mesure.

5. Procédé selon l'une des revendications précédentes, dans lequel on détermine une température, pour chaque soudure par points (5), parmi une pluralité de soudures par points (5) à former successivement.

6. Dispositif de détermination d'une température d'une soudure par points (5) entre deux pièces (1, 2) consistant en au moins un premier métal, cette soudure étant formée au moyen d'au moins une électrode (3, 4) en contact avec l'une des pièces (1, 2) et en un deuxième métal, le dispositif comprenant au moins un voltmètre (7, 8) pour la détermination d'une tension thermoélectrique, correspondant à la température, entre l'électrode (3, 4) et les pièces (1, 2),
caractérisé par un dispositif de commande (10) pour procéder à la réception d'au moins une première valeur de mesure, pour la tension thermoélectrique avant la formation de la soudure par points (5) et d'au moins une deuxième valeur de mesure, pour la tension thermoélectrique après la formation de la soudure par points (5), par une première mémoire (12) destinée à mémoriser la au moins une première valeur de mesure, une deuxième mémoire (13) destinée à mémoriser la au moins une deuxième valeur de mesure, ainsi que par un soustracteur (14) pour former une différence entre la au moins une première valeur de mesure, mémorisée dans la première mémoire (12), et la au moins une deuxième valeur de mesure, mémorisée dans la deuxième mémoire (13), afin de déterminer la température à partir de la différence.

7. Dispositif selon la revendication 6, comportant deux voltmètres (7, 8), chacun d'eux étant associé à l'une parmi deux électrodes (3, 4) pouvant être placées sur les faces opposées des pièces (1, 2), et un dispositif de formation de moyenne (11), qui forme une valeur moyenne à partir de chaque fois deux valeurs mesurées simultanément par les voltmètres (7, 8) et qui la met à disposition en tant que première ou deuxième valeur de mesure.

8. Dispositif selon la revendication 6 ou 7, dans lequel la deuxième mémoire (13) est destinée à mémoriser une pluralité de deuxièmes valeurs de mesure, dans lequel le soustracteur (14) est destiné à former une valeur moyenne des deuxièmes valeurs de mesure, mémorisées dans la deuxième mémoire (13), et qui comporte un différentiateur (15) pour former une dérivée dans le temps de la valeur moyenne, formée par le soustracteur (14), et un diviseur (16) pour établir un quotient à partir de la différence, en tant que dividende, et de la dérivée, en tant que diviseur.

9. Dispositif selon la revendication 8, comprenant un analyseur (17) servant à évaluer le quotient et à fournir une indication au dispositif de commande (10), quant au fait que le quotient doit être considéré comme admissible ou comme inadmissible.

10. Dispositif selon la revendication 9, dans lequel le dispositif de commande (10) peut être relié à une source de courant de soudage (9), servant à fournir le courant nécessaire à la formation de la soudure par points (5), et peut commander le débit du courant.

11. Application du procédé selon l'une des revendications 1 à 5 ou utilisation du dispositif selon l'une des revendications 6 à 10 pour l'évaluation de la qualité d'une soudure par points (5).

12. Application ou utilisation selon la revendication 11, dans laquelle une différence est formée entre la première et la deuxième valeur de mesure et une dérivée, en fonction du temps, de la deuxième valeur de mesure elle-même est déterminée en plus de la deuxième valeur de mesure, tandis que le quotient est formé à partir de la différence, en tant que dividende, et de la dérivée en fonction du temps, en tant que diviseur, afin de juger de la qualité.

13. Application ou utilisation selon la revendication 12, dans laquelle on juge de la qualité de chaque soudure par points (5), parmi une pluralité de soudures par points (5) formées successivement, de telle manière que le quotient soit formé pour chaque soudure par points (5).
